# EUROPEAN PATENT APPLICATION

(11) **EP 1 174 808 A2**
(43) Date of publication of application: **23.01.2002**
(21) Application number: 01113610.8
(22) Date of filing: 15.06.2001
(51) Int. Cl.: G06F 17/60

(54) **Networked machining order mediation system**

(30) Priority: 15.06.2000 JP 2000180350
(71) Applicant: Mori Seiki Co., Ltd., Yamatokoriyama-shi, Nara 639-1160 (JP); Intelligent Manufacturing Systems International, Sacremento, CA 95814 (US)
(72) Inventor: Fujishima, Makoto, Yamatokoriyama-shi, Nara 639-1160 (JP)
(74) Representative: Reinhard - Skuhra - Weise & Partner

(57) **Abstract**

The present invention provides a machining order mediation system which allows for prompt preparation of a reasonable estimation for a machining work and ensures a high level of quality of ordered products. The machining order mediation system comprises terminals provided on a customer side, terminals provided on a machining company side, and a machining order mediation unit (10) connected to the customer side terminals and the machining company side terminals via a network. The machining order mediation unit (10) comprises: a estimation request receiving section (14) for receiving estimation request information for reception of a request for a estimation for machining of parts; a process information preparing section (15) for preparing process information required for the machining of the parts on the basis of the received estimation request information; a machining company information storage section (27) for storing production technology information specific to each machining company; a machining company selecting section (16) for selecting machining companies on the basis of the prepared process information; a basic information preparing section (18) for preparing estimation basis information at least including information on a to-be-used machine tool, tools, machining conditions and a machining program on the basis of the production technology information for each of the selected machining companies and the process information; a basic information delivering section (19) for delivering the prepared estimation basis information to terminals of the selected machining companies to request the selected machining companies to prepare estimations for the machining of the parts; and a estimation returning section (21) for receiving the estimations from the terminals of the selected machining companies and transmitting the estimations to a customer side terminal.

## Description

### BACKGROUND OF THE INVENTION

### Field of the Invention

The present invention relates to a machining order mediation system which comprises terminals provided on a customer side, terminals provided on a machining company side, and a machining order mediation unit connected to the customer side terminals and the machining company side terminals via a network such as internet for mediating between a customer and a machining company for placing a machining order inputted by the customer from any one of the customer side terminals with the machining company.

### Description of the Prior Art

Hitherto known as a machining order mediation system of the aforesaid type is a machining order placement/reception system as disclosed in Japanese Unexamined Patent Publication No. 11-110451 (1999). The machining order placement/reception system comprises computers provided on a supplier side, computers provided on a demander side, and an order placement/reception unit connected to the supplier side computers and the demander side computers via internet.

The order placement/reception unit establishes a line connection with one of the demander side computers having accessed the unit via internet, and displays an order screen for placement of an order for sheet metal working on the demander side computer. Then, the unit analyzes manufacturing order information inputted on the order screen. If the unit judges that a machining work as specified by the manufacturing order information is achievable by emplcying a machine tool on the supplier side, the unit accepts the order. Then, the unit selects a supplier which has a machine tool capable of performing the machining work specified by the manufacturing order information, and automatically places the order for the machining work based on the manufacturing order information with the selected supplier via the computer of the supplier.

The order placement/reception unit is further adapted to transmit the manufacturing order information to the computer of the selected supplier to cause the supplier to prepare a estimation for the machining work, and transmits the prepared estimation to the demander side computer.

However, a criterion to be employed for the selection of the supplier capable of fulfilling the order for the machining work from the demander is limited to whether or not the supplier has the machine tool capable of performing the machining work, and no consideration is given to production technology of the supplier. Therefore, the estimation prepared arbitrarily by the supplier is not always reasonable.

As described above, no consideration is given to the production technology of the selected supplier, so that the supplier may fail to ensure the quality of ordered products. This may significantly reduce the profit of the demander in terms of the cost and the lead time.

Since an advanced production technology is required for machining the ordered products with a higher quality at a lower cost in a shorter lead time, suppliers having no such production technology but having machining tools capable of performing the ordered machining work cannot accept the manufacturing order. In such a case, the suppliers may obtain production technology information required for the machining work from a third party to accept the manufacturing order.

In view of the foregoing, it is an object of the present invention to provide a machining order mediation system which allows for prompt preparation of a reasonable estimation for a machining work and ensures a high level of quality of ordered products.

### SUMMARY OF THE INVENTION

In accordance with the present invention to solve the aforesaid problems, there is provided a machining order mediation system which comprises terminals provided on a customer side, terminals provided on a machining company side, and a machining order mediation unit connected to the customer side terminals and the machining company side terminals via a network, wherein the machining order mediation unit comprises: a estimation request receiving section for receiving estimation request information including information on parts to be machined, the number of the parts and a lead time from any of the customer side terminals for reception of a request for a estimation for the machining of parts; a process information preparing section for preparing process information required for the machining of the parts on the basis of the information on the parts received by the estimation request receiving section; a machining company information storage section for storing production technology information specific to each machining company and at least including information on the type, capabilities, tools and machining conditions of a machine tool owned by the machining company; a machining company selecting section for searching the company-specific production technology information stored in the machining company information storage section on the basis of the process information prepared by the process information preparing section to select machining companies capable of machining the parts; a basic information preparing section for preparing estimation basis information at least including information on a to-be-used machine tool, tools, machining conditions and a machining program for each of the machining companies selected by the machining company selecting section on the basis of the production technology information for each of the selected machining companies and the process information prepared by the process information preparing section; a basic information delivering section for delivering the estimation basis information prepared by the basic information preparing section to terminals of the selected machining companies to request the selected machining companies to prepare estimations for the machining of the parts; and a estimation returning section for receiving the estimations from the terminals of the selected machining companies and transmitting the received estimations to the customer side terminal having made the estimation request.

In the machining order mediation system according to the present invention, the customer side terminal accesses the machining order mediation unit via the network to input the estimation request information including the information on the parts to be machined, the number of the parts and the lead time, and the estimation request receiving section receives the estimation request information. Then, the process information preparing section prepares the process information required for the machining of the parts on the basis of the information on the parts, and the machining company selecting section searches the company-specific production technology information stored in the machining company information storage section on the basis of the prepared process information to select the machining companies capable of machining the parts.

In turn, the basic information preparing section prepares the estimation basis information at least including the information on the to-be-used machine tool, the tools, the machining conditions and the machining program for each of the machining companies selected by the machining company selecting section on the basis of the production technology information for each of the selected machining companies and the process information prepared by the process information preparing section, and the basic information delivering section delivers the prepared estimation basis information to the terminals of the selected machining companies.

Then, the selected machining companies prepare the estimations on the basis of the estimation basis information transmitted thereto, and inputs the estimations from the terminals thereof to the machining order mediation unit via the network. The estimation returning section receives the estimations, and transmits the received estimations to the customer side terminal via the network. Thereafter, the customer examines the estimations to determine a machining company for placement of an order for the machining of the parts. Then, the machining order is placed with the thus determined machining company directly or via the machining order mediation unit.

In the machining order mediation system, the machining companies capable of machining the parts are selected on the basis of the company-specific production technology information including the information on the type, capabilities, machining conditions and tools of the machine tool owned by each of the machining companies, so that the machining companies thus selected can ensure a high level of quality of the parts.

When the selected machining companies are requested to prepare the estimations, the estimation basis information including the information on the to-be-used machine tool, the tools, the machining conditions and the machining program prepared on the basis of the company-specific production technology information and the process information required for the machining of the parts is transmitted to the selected machining companies. Therefore, the selected machining companies can speedily prepare the estimations on the basis of the estimation basis information. Further, the machining company having accepted the order can utilize the estimation basis information, so that the need for designing a machining process can be obviated. Therefore, the machining of the ordered parts can be achieved at a lower cost, and the parts can be delivered in a shorter lead time.

The machining order mediation unit may further comprise a registration section for receiving the production technology information from the machining company side terminals and storing the received production technology information in the machining company information storage section. With this arrangement, the company-specific production technology information can efficiently be collected and accumulated.

In the machining order mediation system, the machining order mediation unit may further comprise an optimum production technology information storage section for storing optimum production technology information at least including information on an optimum to-be-used machine tool, optimum tools and optimum machining conditions for each machining work, wherein the company-specific production technology information to be stored in the machining company information storage section at least includes the information on the type and capabilities of the machine tool owned by each machining company, wherein the basic information preparing section is adapted to prepare the estimation basis information at least including the information on the to-be-used machine tool, the tools, the machining conditions and the machining program for each of the selected machining companies on the basis of the optimum production technology information stored in the optimum production technology information storage section and the process information prepared by the process information preparing section.

With this arrangement, the basic information preparing section prepares the estimation basis information at least including the information on the to-be-used machine tool, the tools, the machining conditions and the machining program for each of the selected machining companies on the basis of the optimum production technology information stored in the optimum production technology information storage section and the process information prepared by the process information preparing section. Even if the selected machining companies have no such optimum production technology information, the machining companies can prepare more reasonable estimations by employing the optimum production technology information. This means that the information on the machining conditions and the like is not necessarily required to be accumulated in the machining company information storage section. The machining company having accepted the order can machine the ordered parts under optimum machining conditions with reference to the estimation basis information thus provided thereto.

Similarly to the aforesaid case, the registration section may be adapted to receive the company-specific production technology information from the machining company side terminals and store the received production technology information in the machining company information storage section. With this arrangement, the company-specific production technology information can efficiently be collected and accumulated.

The machine tools and the production technology owned by the machining companies will be varied with time . In this case, the registration section is preferably adapted to regularly or irregularly receive company-specific production technology information from the respective machining company side terminals to update the data stored in the machining company information storage section for prevention of obsolescence of the data. Similarly, the registration section is preferably adapted to regularly or irregularly receive the company-specific production technology information from the respective machining company side terminals to update the optimum production technology information stored in the optimum production technology information storage section on the basis of the received production technology information for optimization of the data.

The estimation returning section may be adapted to receive the estimations and, if the estimation basis information is modified at the preparation of any of the estimations, the modified estimation basis information from the terminals of the selected machining companies. In this case, the registration section may be adapted to update the company-specific production technology information stored in the machining company information storage section on the basis of the modified estimation basis information received by the estimation returning section.

With this arrangement, if any of the selected machining companies modifies the estimation basis information at the preparation of the estimations, the estimation returning section receives the modified estimation basis information, and the registration section updates the data stored in the machining company information storage section on the basis of the received estimation basis information. Thus, the data stored in the machining company information storage section is constantly updated to the latest data, so that the estimation basis information to be prepared by the basic information preparing section can constantly be optimized.

Similarly, the estimation returning section is preferably adapted to receive the estimations and, if the estimation basis information is modified at the preparation of any of the estimations, the modified estimation basis information from the terminals of the selected machining companies, and the registration section is preferably adapted to update and optimize the optimum production technology information stored in the optimum production technology information storage section on the basis of the modified estimation basis information received by the estimation returning section.

The estimation returning section may further be adapted to transmit the estimation basis information to the customer side terminal having made the estimation request. With this arrangement, the customer having made the estimation request can obtain the estimation basis information including the information on the to-be-used machine tool, the tools, the machining conditions and the machining program, so that the customer can confirm a part machining method and a measuring method for estimation of the cost performance, the quality of the parts and the production ability.

In the machining order mediation system, the machining order mediation unit may further comprise a estimation draft preparing section for estimating a cost required for the machining of the parts on the basis of the estimation basis information prepared by the basic information preparing section and preparing a estimation draft on the basis of the estimated machining cost, and the basic information delivering section may be adapted to deliver the estimation basis information prepared by the basic information preparing section and the estimation draft prepared by the estimation draft preparing section to the terminals of the selected machining companies.

In the machining order mediation system, the draft of the estimation for the machining of the parts is prepared by the machining order mediation unit, so that the selected machining companies can prepare reasonable estimations from an objective viewpoint without subjective factors.

### BRIEF DESCRIPTION OF THE DRAWINGS

Fig. 1 is a block diagram schematically illustrating the construction of a machining order mediation system according to one embodiment of the present invention;
Fig. 2 is a block diagram schematically illustrating the construction of a machining order mediation unit according to the embodiment;
Figs. 3 to 7 are diagrams for explaining data to be stored in a machining company information storage section according to the embodiment;
Figs. 8, 9a and 9b, and 10a to 10c are diagrams for explaining data to be received by a estimation request receiving section according to the embodiment;
Figs. 11 to 13 are diagrams for explaining process information to be prepared by a process information preparing section according to the embodiment; and
Figs. 14 to 19 are diagrams for explaining estimation basis information to be prepared by a basic information preparing section according to the embodiment.

### DESCRIPTION OF THE PREFERRED EMBODIMENT

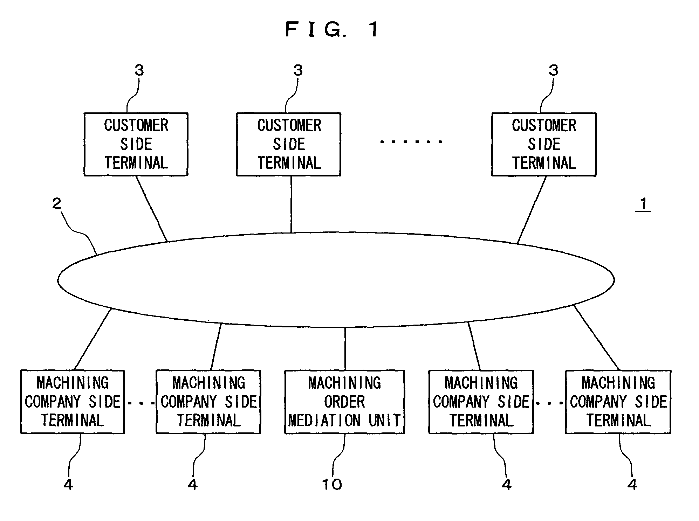

With reference to the attached drawings, the present invention will hereinafter be described by way of a specific embodiment thereof. Fig. 1 is a diagram schematically illustrating the construction of a machining order mediation system according to this embodiment. As shown in Fig. 1, the machining order mediation system 1 includes a plurality of terminals 3 provided on a customer side, a plurality of terminals 4 provided on a machining company side, and a machining order mediation unit 10 connected to the customer side terminals 3 and the machining company side terminals 4 via a network 2 such as internet. The machining order mediation unit 10 functions as a server including an internet server such as a WWW server and CGI scripts, while the customer side terminals 3 and the machining company side terminals 4 function as clients each having a browser.

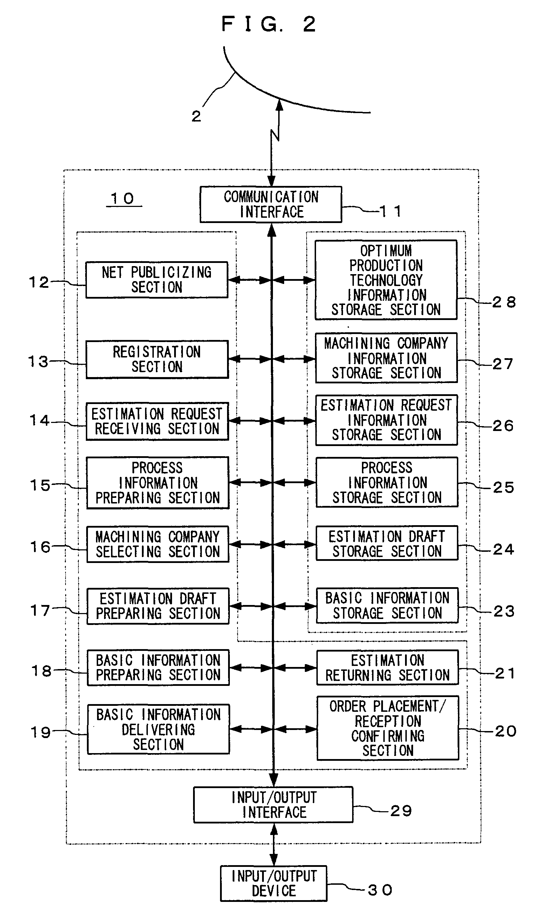

As shown in Fig. 2, the machining order mediation unit 10 includes a communication interface 11, a net publicizing section 12, a registration section 13, a estimation request receiving section 14, a process information preparing section 15, a machining company selecting section 16, a estimation draft preparing section 17, a basic information preparing section 18, a basic information delivering section 19, an order placement/reception confirming section 20, a estimation returning section 21, a basic information storage section 23, a estimation draft storage section 24, a process information storage section 25, a estimation request information storage section 26, a machining company information storage section 27, an optimum production technology information storage section 28, an input/output interface 29, an input/output device 30, and the like. The machining order mediation unit 10 is connected to the network 2 via the communication interface 11.

The net publicizing section 12, the registration section 13, the estimation request receiving section 14, the process information preparing section 15, the machining company selecting section 16, the estimation draft preparing section 17, the basic information preparing section 18, the basic information delivering section 19, the order placement/reception confirming section 20 and the estimation returning section 21 are constituted by a CPU, a RAM, a ROM, an auxiliary storage section which stores predetermined process execution programs, and the like. The basic information storage section 23, the estimation draft storage section 24, the process information storage section 25, the estimation request information storage section 26, the machining company information storage section 27 and the optimum production technology information storage section 28 are comprised of an auxiliary storage and the like. These components will hereinafter be described in detail.

The net publicizing section 12 publicizes information on mediation for placement of an order for machining, for example, on a home page (web page) via the network 2 to allow the customer side terminals 3 and the machining company side terminals 4 to browse the information via the network 2. More specifically, an advertisement screen containing the machining order mediation information is displayed on the customer side terminals 3 and the machining company side terminals 4, and applications for registration of a machining company and mediation for placement of a machining order are permitted on the screen.

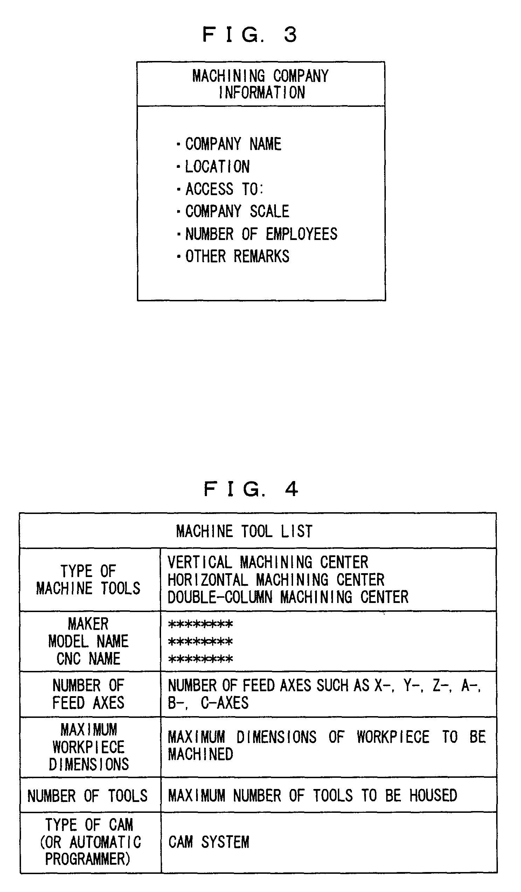

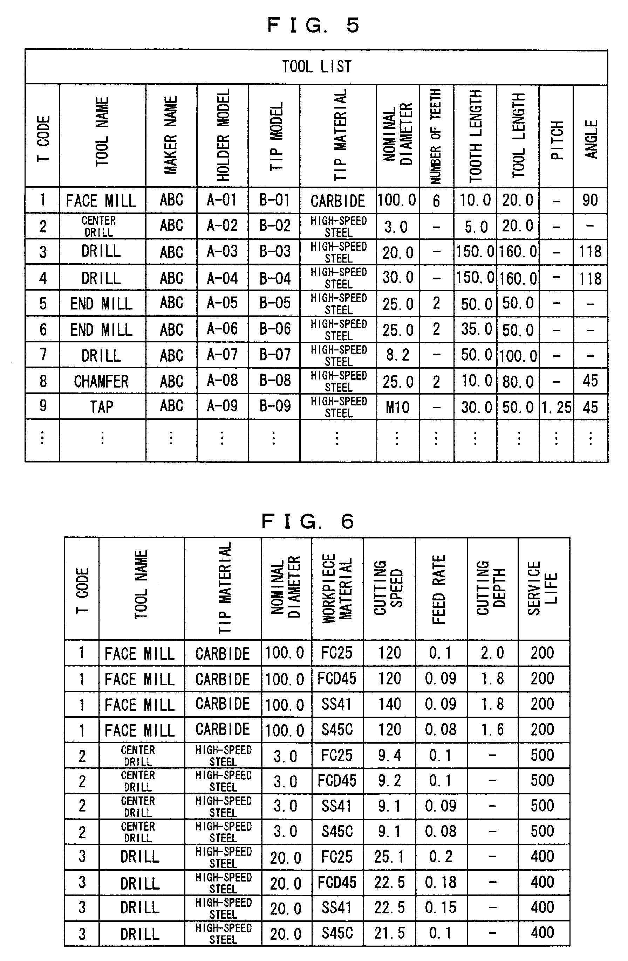

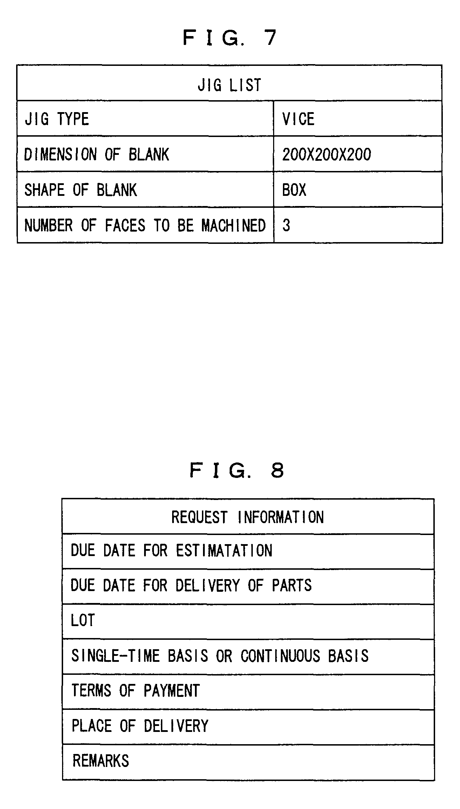

The registration section 13 stores information on machining companies belonging to the machining order mediation system 1 and production technology information thereof along with registration numbers thereof in the machining company information storage section 27. More specifically, when a machining company side terminal 4 accesses the machining order mediation unit 10 and the registration section 13 receives a request for registration from the machining company side terminal 4, a predetermined input format is transmitted from the net publicizing section 12 to the machining company side terminal 4 having requested the registration. When production technology information is inputted in the input format from the machining company side terminal 4, the registration section 13 receives the inputted production technology information, and assigns a registration number to the machining company. Then, the received production technology information and the registration number are stored in the machining company information storage section 27. Exemplary machining company information to be thus registered is shown in Fig. 3, and exemplary production technology information is shown in Figs. 4 to 6. Fig. 4 shows a list of machine tools owned by the machining company, and Fig. 5 shows a list of tools owned by the machining company. Fig. 6 shows a list of machining conditions for the tools, and the Fig. 7 shows a list of jigs owned by the machining company.

The registration section 13 also receives production technology information currently considered to be optimum via the input/output device 30, and stores the received optimum production technology information in the optimum production technology information storage section 28. The optimum production technology information includes a list of tools and a list of machining conditions as shown in Figs. 5 and 6, respectively.

The estimation request receiving section 14 receives a request for a estimation from any of the customer side terminals 3, and stores the received contents in the estimation request information storage section 26. More specifically, when the customer side terminal 3 accesses the machining order mediation unit 10 and the estimation request receiving section 14 receives the estimation request from the customer side terminal 3, a predetermined input format is transmitted from the net publicizing section 12 to the customer side terminal 3 having requested the estimation. When estimation request information (information on parts to be ordered) is inputted in the input format from the customer side terminal 3, the estimation request receiving section 14 receives the estimation request information, and the received estimation request information is stored in the estimation request information storage section 26.

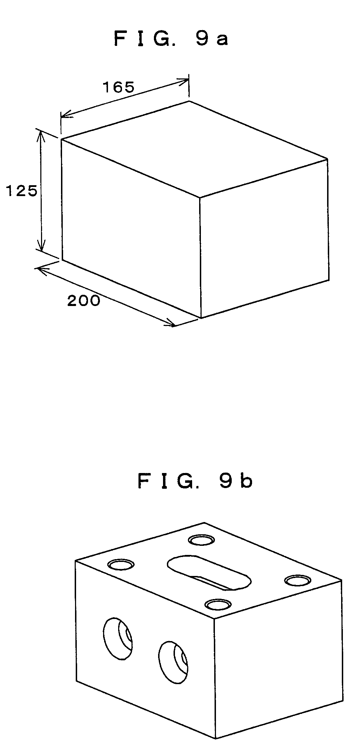

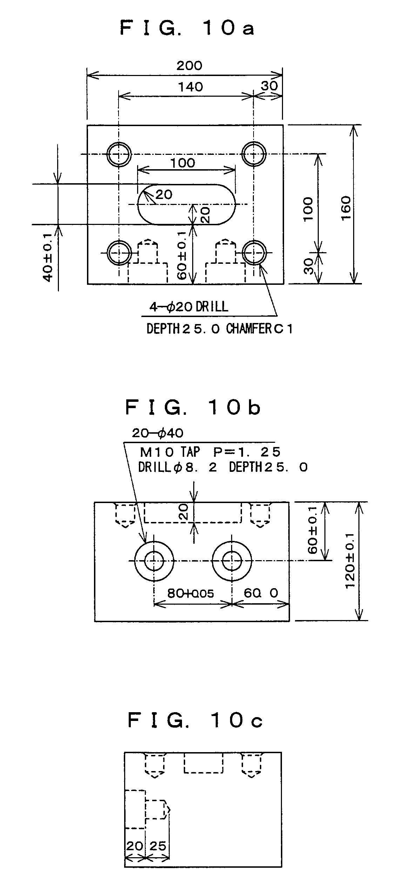

The data (information on the parts) to be inputted at the request for the estimation includes data as shown in Fig. 8 and diagrammatic data of the parts for the estimation as shown in Figs. 9a and 9b, and 10a to 10c. The diagrammatic data is electronic data, and data generation by the process information preparing section 15, the basic information preparing section 18 and the estimation draft preparing section 17 is based on the diagrammatic data. The diagrammatic data may be transmitted in a format such as DXF, IGES, PARASOLID or STEP.

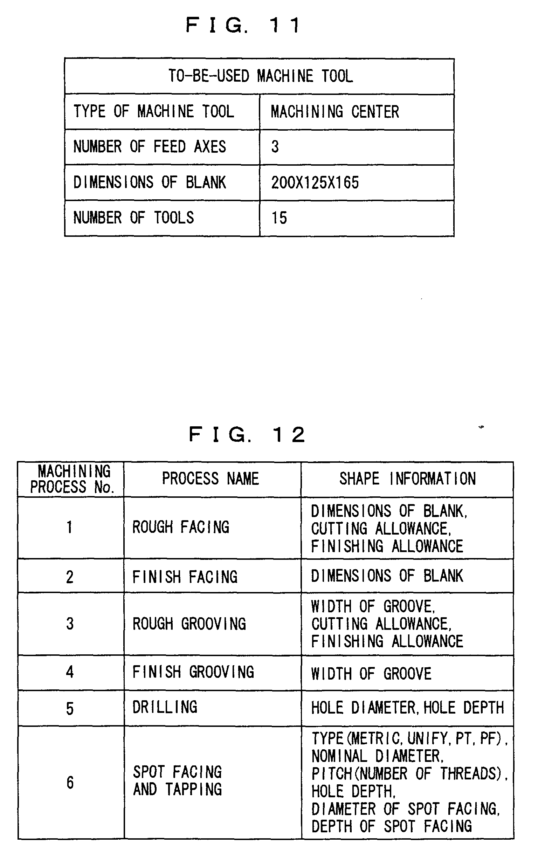

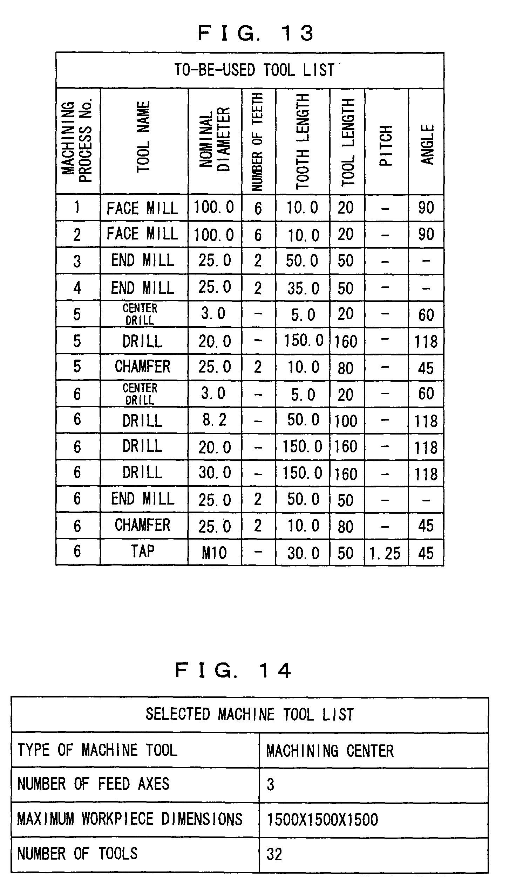

The process information preparing section 15 prepares process information required for machining the ordered parts on the basis of the estimation request information stored in the estimation request information storage section 26, and stores the prepared process information in the process information storage section 25. The process information includes information on the type and capabilities of a to-be-used machine tool as shown in Fig. 11, information on a machining process as shown in Fig. 12, information on tools as shown in Fig. 13, and information on jigs and the like.

The machining company selecting section 16 searches the production technology information specific to each of the machining companies stored in the machining company information storage section 27 on the basis of the process information stored in the process information storage section 25 to select machining companies having production technology information matched with the process information.

The basic information preparing section 18 prepares estimation basis information including information on a to-be-used machine tool, jigs and tools, machining conditions, a machining program and inspections for each of the machining companies selected by the machining company selecting section 16 on the basis of the process information stored in the process information storage section 25 and the company-specific production technology information stored in the machining company information storage section 27, and stores the estimation basis information in the basic information storage section 23. The tools are determined in substantially the same manner as by a CAM, and the machining conditions and the machining program are determined in substantially the same manner as by an automatic programming device.

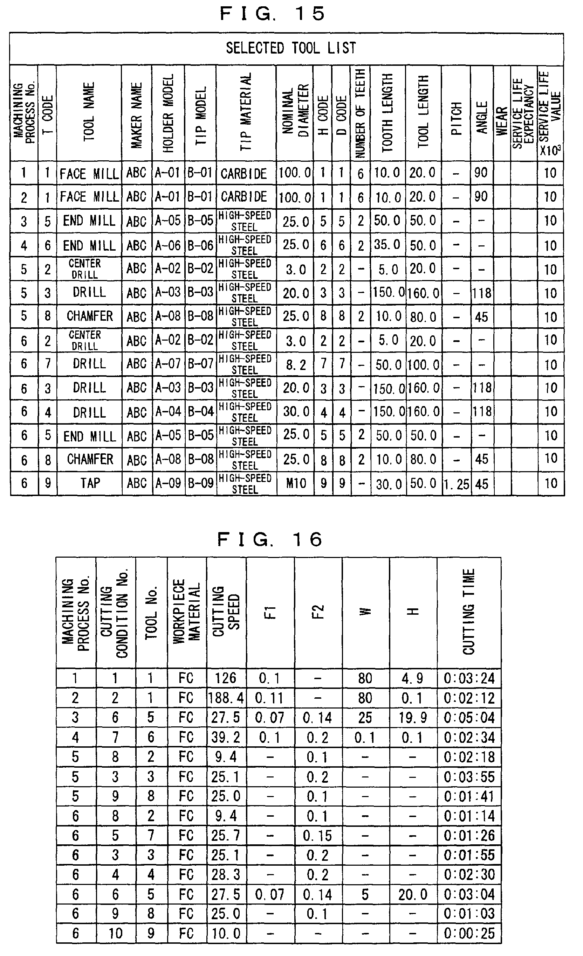

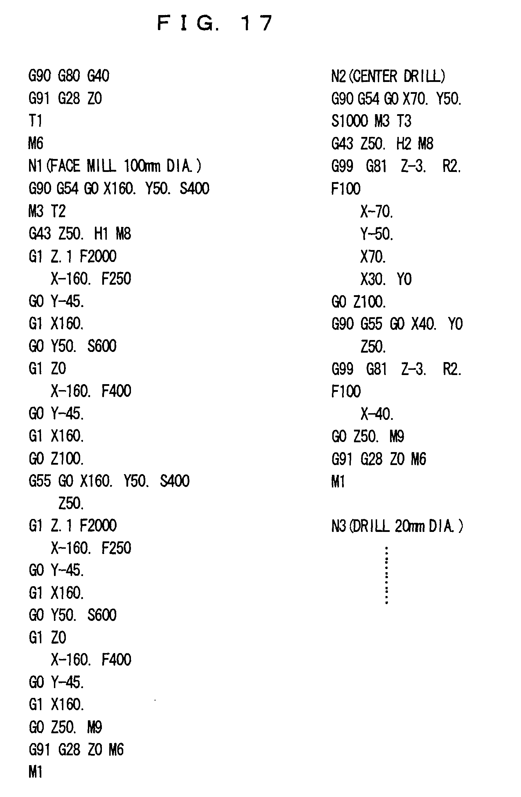

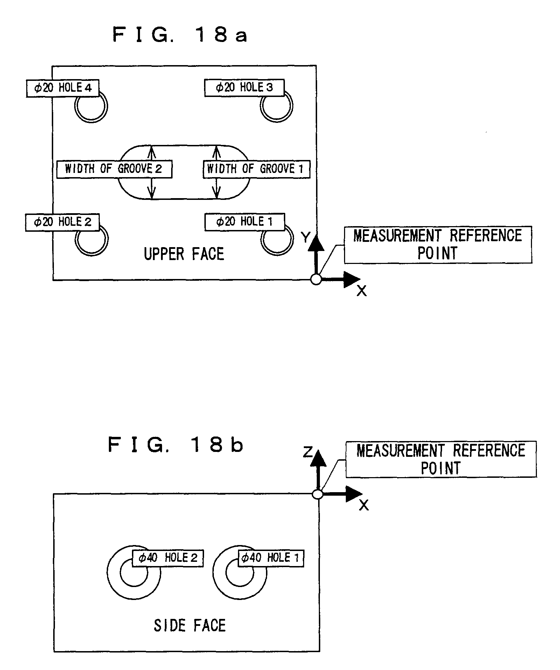

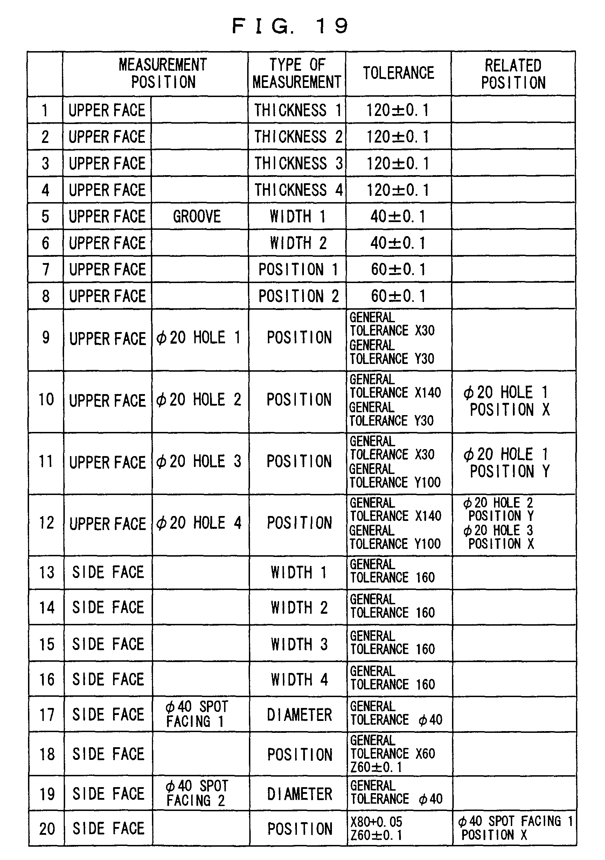

Exemplary machine information to be thus prepared is shown in Fig. 14, and exemplary tool information is shown in Fig. 15. Exemplary machining condition information is shown in Fig. 16, and exemplary machining program is shown in Fig. 17. Exemplary inspection information is shown in Figs. 18a, 18b and 19. In Fig. 16, F1, F2, W and H denote a feed (mm) per tooth, a feed (mm) per revolution of a tool, a width (mm) of cut of the tool, and a depth (mm) of cut of the tool, respectively. The machining program shown in Fig. 17 is prepared as having an optimized machining sequence on the basis of the information shown in Figs. 14 to 16. Figs. 18a and 18b are diagrams for explaining measurement reference points and measurement points, and Fig. 19 illustrates a list of measurement items.

The estimation draft preparing section 18 prepares drafts of the estimation for the machining of the ordered parts including depreciation expenses on the machine and the jigs, a tool cost, a material cost and a labor cost for each of the selected machining companies on the basis of a machining time determined by analyzing the machining conditions and the machining program, and stores the prepared machining estimation drafts in the estimation draft storage section 24. General basic data related to the depreciation expenses on the machine and the jigs, the tool cost, the material cost and the labor cost may be prepared in advance, and the machining estimation drafts may be prepared with reference to the general basic data. Alternatively, the basic data may be stored for each of the machining companies in the machining company information storage section 27, and the machining estimation drafts may be prepared with reference to the basic data for each of the machining companies.

The basic information delivering section 19 delivers the estimation basis information stored for each of the selected machining companies in the basic information storage section 23 and the machining estimation drafts stored in the estimation draft storage section 24 to the corresponding machining company side terminals 4 to request the respective machining companies to prepare estimations for the parts.

The estimation returning section 21 receives the estimations from the machining company side terminals 4, and transmits the received estimations to the customer side terminal 3 having made the estimation request. The order placement/reception confirming section 20 receives a reply on the estimations from the customer side terminal 3, then determines a machining company for placement of the order, and transmits an order placement confirmation to the terminal 4 of the determined machining company.

In the machining order mediation system 1 of this embodiment having the aforesaid construction, any one of the customer side terminals 3 accesses the machining order mediation unit 10 via the network 2, and inputs estimation request information including information on parts to be machined, the number of the parts, a lead time and the like. The estimation request receiving section 14 receives the estimation request information, and stores the received estimation request information in the estimation request information storage section 26. Then, the process information preparing section 15 prepares process information required for the machining of the parts on the basis of the estimation request information, and the machining company selecting section 16 searches the company-specific production technology information stored in the machining company information storage section 27 on the basis of the prepared process information to select machining companies capable of machining the parts.

In turn, the basic information preparing section 18 prepares estimation basis information including information on a to-be-used machine tool, jigs and tools, machining conditions and a machining program for each of the machining companies selected by the machining company selecting section 16 on the basis of the production technology information for the selected machining companies and the process information prepared by the process information preparing section 15, and the estimation draft preparing section 17 prepares a draft of a estimation for the machining of the parts for each of the selected machining companies on the basis of a machining time determined by analyzing the machining conditions and the machining program. Then, the basic information delivering section 19 delivers the prepared machining estimation drafts together with the estimation basis information to the terminals 4 of the corresponding machining companies.

The machining companies respectively prepare estimations on the basis of the transmitted estimation basis information and machining estimation drafts, and transmit the estimations from the terminals 4 of the machining companies to the machining order mediation unit 10 via the network 2. The estimation returning section 21 receives the estimations, and transmit the received estimations to the customer side terminal 3 via the network 2. Thereafter, the customer examines the estimations to determine a machining company for placement of the order, and transmits information on the machining company thus determined, i.e., a reply on the estimations, from the customer side terminal 3 to the machining order mediation unit 10. The order placement/reception confirming section 20 receives the reply, and transmits order reception confirmation information to the terminal 4 of the determined machining company. Then, the machining company transacts with the customer on the basis of the estimation.

In the machining order mediation system 1, the machining companies capable of machining the parts are selected on the basis of the company-specific production technology information including the information on the types, capabilities, machining conditions and tools of the machine tools owned by the machining companies, so that the machining company thus selected can ensure a high level of quality of the parts.

When the selected machining companies are requested to prepare the estimations, the machining estimation drafts and the estimation basis information including the information on the to-be-used machine tool, the tools, the machining conditions and the machining program prepared on the basis of the production technology information of the machining companies and the process information required for the machining of the parts are transmitted to the machining companies. Therefore, the machining companies can speedily prepare the estimations on the basis of the estimation basis information and the estimation drafts. After accepting the order, the machining company can utilize the estimation basis information, so that the need for designing a machining process can be obviated. Therefore, the machining of the ordered parts can be achieved at a lower cost, and the parts can be delivered in a shorter lead time.

Since the estimation basis information is transmitted to the customer having made the estimation request, the customer can confirm a part machining method and a measuring method and estimate the cost performance, the quality of the parts and the production ability.

Although the estimation basis information is prepared on the basis of the company-specific production technology information stored in the machining company information storage section 27 by the basic information preparing section 18 in the embodiment described above, the optimum production technology information stored in the optimum production technology information storage section 28 may be employed instead of the company-specific production technology information for the preparation of the estimation basis information. Even if the machining companies selected by the machining company selecting section 16 have no such optimum production technology information, reasonable estimations can be provided by utilizing the optimum production technology information stored in the optimum production technology information storage section 28. Further, the machining company having accepted the order can machine the ordered parts under the optimum machining conditions with reference to the estimation basis information transmitted thereto.

It is preferred that the company-specific production technology information stored in the machining company information storage section 27 and the optimum production technology information stored in the optimum production technology information storage section 28 are regularly or irregularly updated to the latest information by the registration section 13 for prevention of obsolescence of the data. The optimum production technology information stored in the optimum production technology information storage section 28 may be updated with the company-specific production technology information inputted from the machining company side terminals 4. That is, the inputted company-specific production technology information is analyzed and, if the analyzed production technology information is more advanced than the optimum production technology information stored in the optimum production technology information storage section 28, the optimum production technology information in the optimum production technology information storage section 28 is updated with the more advanced information.

If any of the machining companies having received the estimation requests possesses updated production technology information when the estimation basis information is transmitted from the basic information delivering section 19, the machining company may modify the transmitted estimation basis information on the basis of the updated production technology information, and prepare the estimation on the basis of the modified estimation basis information. The estimation returning section 21 may be adapted to receive the modified estimation basis information. Further, the registration section 13 may be adapted to analyze the modified estimation basis information received by the estimation returning section 21 and update the company-specific production technology information stored in the machining company information storage section 27 and the optimum production technology information stored in the optimum production technology information storage section 28.

Although the company-specific production technology information is received from the machining company side terminals 4 by the registration section 13 and stored in the machining company information storage section 27 in the embodiment described above, the company-specific production technology information may be inputted from the input/output device 30 and stored in the machining company information storage section 27.

## Claims

1. A networked machining order mediation system, which comprises terminals provided on a customer side, terminals provided on a machining company side, and a machining order mediation unit connected to the customer side terminals and the machining company side terminals via a network, the machining order mediation system **characterized in that** the machining order mediation unit comprises:
a estimation request receiving section for receiving estimation request information including information on parts to be machined, the number of the parts and a lead time from any of the customer side terminals for reception of a request for a estimation for the machining of the parts;
a process information preparing section for preparing process information required for the machining of the parts on the basis of the information on the parts received by the estimation request receiving section;
a machining company information storage section for storing production technology information specific to each machining company and at least including information on the type, capabilities, tools and machining conditions of a machine tool owned by the machining company;
a machining company selecting section for searching the company-specific production technology information stored in the machining company information storage section on the basis of the process information prepared by the process information preparing section to select machining companies capable of machining the parts;
a basic information preparing section for preparing estimation basis information at least including information on a to-be-used machine tool, tools, machining conditions and a machining program for each of the machining companies selected by the machining company selecting section on the basis of the production technology information for each of the selected machining companies and the process information prepared by the process information preparing section;
a basic information delivering section for delivering the estimation basis information prepared by the basic information preparing section to terminals of the selected machining companies to request the selected machining companies to prepare estimations for the machining of the parts; and
a estimation returning section for receiving the estimations from the terminals of the selected machining companies and transmitting the received estimations to the customer side terminal having made the estimation request.

2. A networked machining order mediation system as set forth in claim 1, wherein the machining order mediation unit further comprises a registration section for receiving the production technology information from the machining company side terminals and storing the received production technology information in the machining company information storage section.

3. A networked machining order mediation system as set forth in claim 1,
wherein the machining order mediation unit further comprises an optimum production technology information storage section for storing optimum production technology information at least including information on an optimum to-be-used machine tool, optimum tools and optimum machining conditions for each machining work,
wherein the company-specific production technology information to be stored in the machining company information storage section at least includes the information on the type and capabilities of the machine tool owned by each machining company,
wherein the basic information preparing section is operative to prepare the estimation basis information at least including the information on the to-be-used machine tool, the tools, the machining conditions and the machining program for each of the selected machining companies on the basis of the optimum production technology information stored in the optimum production technology information storage section and the process information prepared by the process information preparing section.

4. A networked machining order mediation system as set forth in claim 3, wherein the machining order mediation unit further comprises a registration section for receiving the production technology information from the machining company side terminals and storing the received production technology information in the machining company information storage section.

5. A networked machining order mediation system as set forth in claim 2 or 4, wherein the registration section is further operative to regularly or irregularly receive the company-specific production technology information from the respective machining company side terminals to update the company-specific production technology information stored in the machining company information storage section.

6. A networked machining order mediation system as set forth in claim 4, wherein the registration section is further operative to regularly or irregularly receive the company-specific production technology information from the respective machining company side terminals to update and optimize the optimum production technology information stored in the optimum production technology information storage section on the basis of the received production technology information.

7. A networked machining order mediation system as set forth in any of claims 2, 4, 5 and 6,
wherein the estimation returning section is operative to receive the estimations and, if the estimation basis information is modified at the preparation of any of the estimations, the modified estimation basis information from the terminals of the selected machining companies,
wherein the registration section is further operative to update the company-specific production technology information stored in the machining company information storage section on the basis of the modified estimation basis information received by the estimation returning section.

8. A networked machining order mediation system as set forth in claim 4 or 6,
wherein the estimation returning section is operative to receive the estimations and, if the estimation basis information is modified at the preparation of any of the estimations, the modified estimation basis information from the terminals of the selected machining companies,
wherein the registration section is further operative to update and optimize the optimum production technology information stored in the optimum production technology information storage section on the basis of the modified estimation basis information received by the estimation returning section.

9. A networked machining order mediation system as set forth in any of claims 1 to 8, wherein the estimation returning section is further operative to transmit the estimation basis information to the customer side terminal having made the estimation request.

10. A networked machining order mediation system as set forth in any of claims 1 to 9,
wherein the machining order mediation unit further comprises a estimation draft preparing section for estimating a cost required for the machining of the parts on the basis of the estimation basis information prepared by the basic information preparing section and preparing a estimation draft on the basis of the estimated machining cost,
wherein the basic information delivering section is operative to deliver the estimation basis information prepared by the basic information preparing section and the estimation draft prepared by the estimation draft preparing section to the terminals of the selected machining companies.
